# EUROPEAN PATENT APPLICATION

(11) **EP 1 381 224 A2**
(43) Date of publication of application: **14.01.2004**
(21) Application number: 03254410.8
(22) Date of filing: 11.07.2003
(51) Int. Cl.: H04N 5/00

(54) **Method and system for display and manipulation of thematic segmentation in the analysis and presentation of film and video**

(30) Priority: 12.07.2002 US 395652 P
(71) Applicant: Ensequence, Inc., Portland, OR 97204 (US)
(72) Inventor: Wallace, Michael W., Vancouver, WA 98683 (US); Acott, Troy S., Beaverton, OR 97007 (US); Cooper, Ross, Portland, OR 97201 (US); Mason, Joanna, Portland, OR 97214 (US)
(74) Representative: Roberts, Mark Peter

(57) **Abstract**

A method, computer readable medium, and system are provided for generating thematic information correlated with segments for possible inclusion in a program. Thematic information concerning the program is developed. A data structure is generated collecting information identifying a theme and associating a segment with the theme. The data structure is configured to be engaged by a media player to present additional content related to the thematic information in the program.

## Description

This invention relates generally to computer systems and software applications therefor and, more specifically, to display and manipulation of digitized film and video imagery.

Television generally provides a linear audio-visual experience for the viewer, whether the viewer is watching a live broadcast or playing a pre-recorded program. Broadcast programs play from start to finish, following a single progression representing the program creator's choice of order and presentation of images and sounds. Prerecorded programs provide viewers with some flexibility as to how he or she can engage a program. Videotapes, DVDs, and other recording devices allow a user to pause or stop a program, or to rewind or fast forward to other sections. DVDs and other direct access recording devices allow viewers to move directly to marked locations in the recording. For example, DVDs frequently have chapter or scene lists to allow users to jump to a particular, desired aspect of the program. Although viewers of prerecorded programs have the luxury of stopping the program or moving back and forth within the program, this still represents a linear experience as the viewer moves back and forth along a single timeline.

Because programs typically have been experienced in a linear fashion, conventional program development tools have been designed to generate programs according to a linear model. A single, linear narrative is developed as a foundation for the program. Subsequently, sometimes with the aid of storyboards, computer graphics, or other visual materials, it is determined what scenes or shots are to be photographed, animated, computer-generated, or otherwise created. These scenes may be shot out of order and later inserted in their designated place when the scenes are edited together into the final form of the work. Thus, aspects of the creation of a program may be nonlinear. Notwithstanding, the final outcome is a linear experience for the viewers.

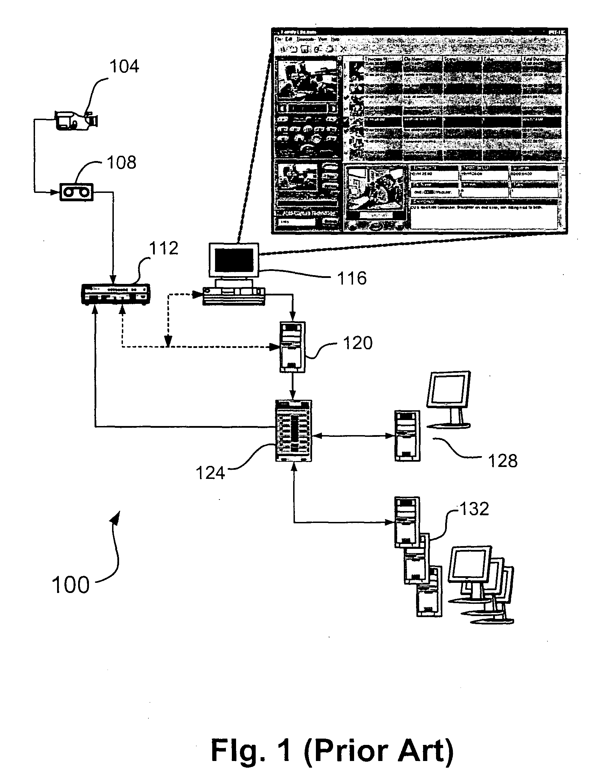

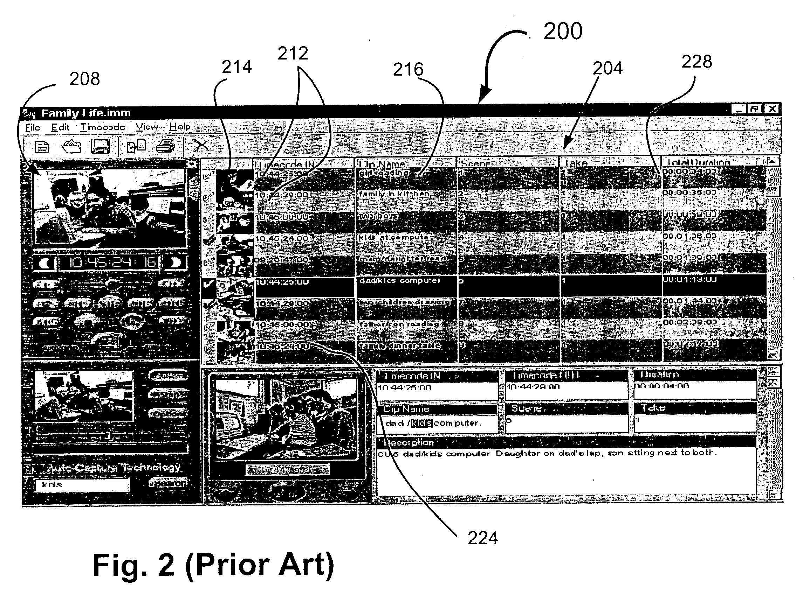

FIGURE 1 shows a conventional computer-assisted environment 100 for generating a video or audio-video program. In this example, video is shot by a videographer with a camera 104 and recorded on a storage media such as videotape 108. Video also can be generated by animation, computer generation, or in other manners as a first step in creating a program in the environment 100. Once the video has been recorded to tape 108, the tape 108 is inserted into a playback/recording facility such as a videotape deck 112. The videotape deck 112 is operably coupled with a logging system 116. Portions of the recorded video are digitized using a conversion system 120 to create icons to identify individual segments, as will be further described in connection with FIGURE 2.

FIGURE 2 is a screen shot 200 from the conventional video logging system 116 (FIGURE 1). The video logging system 116 is used to divide the digitized video into workable segments logged in a capture list 204. The capture list is used as a master directory in controlling the process of editing the segments into a unified whole. The video logging system 116 controls the videotape deck 112. A control window 208 allows the videotape deck 112 to be controlled using familiar-appearing controls to advance the tape 108 forward and backward in time. The screen shows identifying information for a plurality of segments 212. Content of these segments 212 can be assigned, thereby identifying icons 214 representative of their content. Labels 216 also can be assigned to further identify the segments 212. Other segment properties, such as time code start points 224 and runtime 228 can also be logged in the capture list 204. Once desirable segments have been logged using the logging system 116, desired segments can then be digitized or batch-captured for subsequent non-linear video editing when the segments can be linked into a coherent whole.

Referring back to FIGURE 1, the individually logged segments are stored on a file server 124 where they can be nonlinearly accessed at an editing station 128 and sequenced into a linear whole. Video processing stations 132 allow a user to add effects or adjust video properties in the individual segments or after the segments have been edited together. The end result is re-recorded back to tape 108 using the videotape deck 112 to generate the final program.

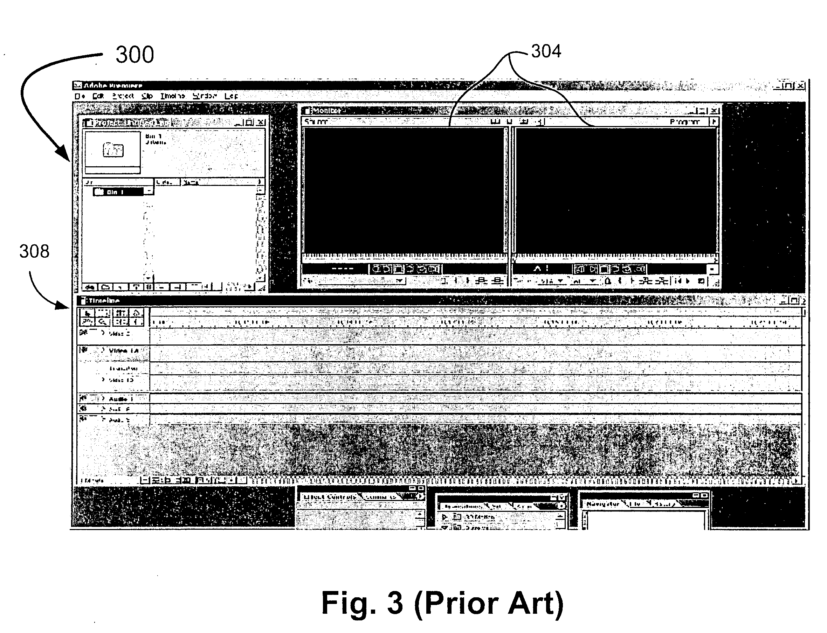

Computer editing hardware and software, such as might be employed at an editing station 128 (FIGURE 1), have become increasingly sophisticated. FIGURE 3 shows a screen 300 from a conventional, modern editing station. Motion video windows 304 allow direct visualization of film and video content on a display of an editing station 128 (FIGURE 1). A video timeline 308 provides allows for control of the video content shown in the video windows 304. The video timeline 308 also allows for arrangement of segments on the video timeline 308 to join separate segments into a single, linear video sequence. The segments may be arranged and rearranged along the video timeline 308, allowing for nonlinear editing to create the linear program.

A video timeline 308 also can be used in analysis or display of video segments in the video windows 304 for annotation or indexing purposes. A number of software tools exist for automatically segmenting a video work into a multiplicity of shorter segments. The segments typically are aligned with scene breaks or other superficial shifts, such as changing camera angles. These tools can be configured to automatically or semi-automatically detect significant or representative frames from each segment, and display these representative frames as icons which can be used in the indexing process. In any case, the focus of such tools is to create a linear sequence of contiguous, non-overlapping intervals which define the structure and content of the original work. Annotations or other content, in the form of associated audio or video data, is associable with the scene breaks or other evident changes that mark index markers in the program. This allows, for example, synchronizing closed-captioning text that is incorporated into the work.

Notwithstanding the ability to correlate additional content with index markers in the program, merely assembling the program as a series of contiguous, non-overlapping segments presents an impoverished method of analyzing the content of the work. In most film and video works, the narrative content consists of a multiplicity of thematic elements interwoven within the work and potentially spread among many separate scenes. Associating additional content with individual index markers in the program, therefore, only allows for treating a thematic point at a single marker. It does not allow an individual analyzing the work to appreciate interrelationships between instances of the themes.

The limitations of conventional editing tools undermine a viewer's potential analysis and appreciation of both fictional and non-fictional works. In fictional works, imagery may be scattered among different scenes, and it may be difficult to appreciate the significance of these symbols as they are scattered throughout the work. In non-fictional works, such as a sporting event, themes may consist of the performance of teams, sequences of plays, actions of individual players, strategic decisions made by a coach, and significant moments within the action such as scoring events, all occurring at various times and in various sequences. As in the example of the appearance of imagery in a fictional work, it may be difficult to appreciate the role of such aspects in the outcome of the contest when the elements of such themes are presented as spread across the entire event.

Thus, there is an unmet need in the art for methods and systems capable of generating programs which can be engaged more flexibly to take advantage of improved viewing technology so that users can tailor their viewing experiences to better appreciate events or ideas included in the program.

Embodiments of the present invention provide for generating thematic information correlated with segments of a program. Video or other media can be analyzed in terms of one or more themes, and segments of the video are associable with the one or more themes. The thematic information is stored in a format which can be used to present the content of the program in terms of the one or more themes instead of in the form of following a single linear progression.

More specifically, embodiments of the present invention provide a method, a computer readable medium, and a system for generating thematic information correlated with segments for possible inclusion in a program. Thematic information concerning the program is developed. A data structure is generated collecting information identifying a theme and associating a segment with the theme. The data structure is configured to be engaged by a media player to present additional content related to the thematic information in the program.

In accordance with further aspects of the invention, embodiments of the present invention provide for reviewing a plurality of segments to identify the theme in the program, identifying the segment of the program related to the theme, and associating the segment with the theme.

A timeline may be associated with the program, and manipulation of the timeline allows for controlling the flow of the program. Position of a segment relative to the timeline can be used to identify segments, and temporal position of the segment can be used to identify and associate the segment with a theme.

A plurality of themes can be identified, and the themes can be hierarchically associated with each other. A segment can be associated with more than one theme. A user interface provides for one or more themes to be displayed at a time.

Embodiments of the present invention generate a data structure of the thematic information. The data structure can be in the form of a table, listing a plurality of segments and a plurality of themes, such that the table allows the plurality of segments to be associated with one or more of the plurality of themes.

The preferred and alternative embodiments of the present invention are described in detail below, by way of example only, with reference to the following drawings, in which:-
FIGURE 1 shows a conventional editing environment for generating a media program;
FIGURE 2 is a screen shot from the conventional editing environment of FIGURE 1;
FIGURE 3 is a screen shot from a conventional editing environment showing a timeline and viewing windows for linear editing of a program;
FIGURE 4 is a set of windows of an embodiment of the present invention for generating thematic information which can be used to generate additional content from a program;
FIGURE 5 shows an environment for using an embodiment of the present invention for generating thematic information;
FIGURE 6 is a table of a data structure of thematic information according to an embodiment of the present invention;
FIGURE 7 is a flowchart of a routine for generating thematic information according to an embodiment of the present invention; and
FIGURE 8 is a block diagram of a data processing/media control system for generating thematic information according to an embodiment of the present invention.

By way of overview, embodiments of the present invention provide a method, a computer readable medium, and a system for generating thematic information correlated with segments for possible inclusion in a program. Thematic information concerning the program is developed. A data structure is generated collecting information identifying a theme and associating a segment with the theme. The data structure is configured to be engaged by a media player to present additional content related to the thematic information in the program.

As previously described, a visual or other work can include a number of thematic aspects. In a fictional work, thematic aspects might include appearance of an object that corroborates a theme, appearance of a character, a character's discussion of a certain topic, and other motifs. In a nonfictional work, such as a sporting event, thematic aspects might be scoring plays, critical plays, key coaching decisions, and similar aspects. Throughout the program, various segments might relate to one or more of these themes. Associating these segments with the appropriate theme or themes allows a user accessing the program through a suitably equipped receiver to experience the segments related to that theme, regardless of where the segments fall within the linear timeline of the program.

One presently preferred embodiment of this invention is a tool which is used to create enhanced interactive television applications which are synchronized to video works. This software tool embodies a number of aspects of the use of thematic segmentation of video.

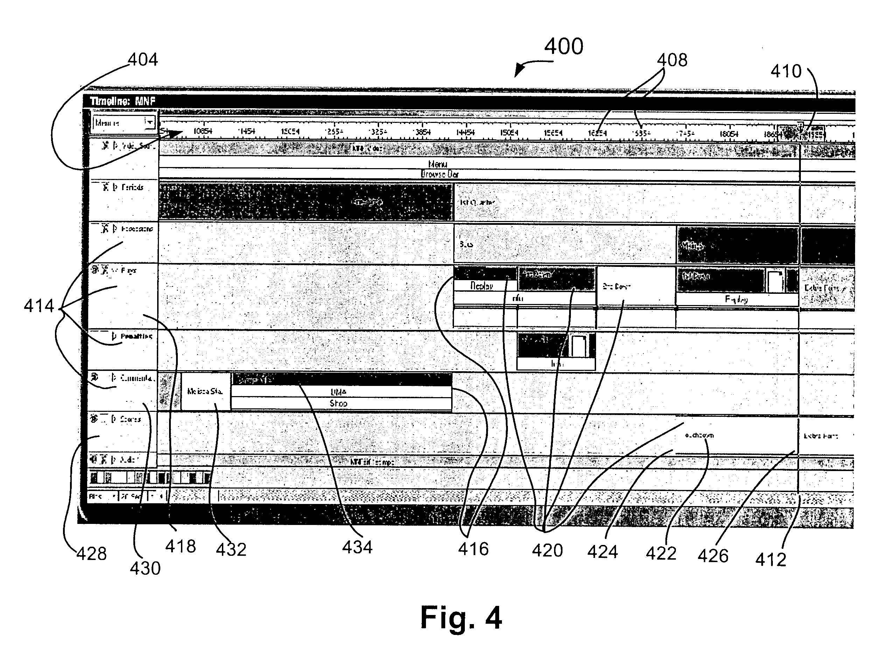

FIGURE 4 shows an exemplary screen 400 from such a tool. The screen 400 prominently includes a program timeline 404. The timeline 404 in this exemplary illustration is suitably marked in frame numbers 408. However, it will be appreciated that in other embodiments the timeline 404 is suitably marked with an elapsed time or other relative time to measure flow of the program as desired for a particular application.

A time marker 410 signifies a position along the timeline in the program that a user of the system currently is viewing. An elongated time pointer 412 shows where on the timeline 404 the user is viewing throughout a number of themes 414 that have been identified, as will be further explained below. The time marker 410 can be manipulated by a user via a mouse, a keyboard, or other input technologies to advance the time marker 410 forward or backward along the timeline 404. In one presently preferred embodiment, the tool is linked to video storage equipment such as a videotape deck 112 (FIGURE 1) such that manipulation of the time marker 410 actually controls physical access of the storage medium. This is similar to modern logging and editing tools (FIGURES 2 and 3). In addition, one presently preferred embodiment of the present invention also has monitoring windows (not shown) like the modern editing tool (FIGURE 3) such that output of the storage medium can be viewed directly on a computer screen.

At a left side of the screen, a plurality of themes 414 are identified for a program which, in this exemplary illustration, is a football game. The themes 414 have been identified for possessions, plays, penalties, commentary, scores, and other thematic aspects. As will be appreciated from the foregoing discussion, a viewer of a program may wish to experience one or more of these themes 414 without having to linearly experience an entire telecast of a game. Embodiments of the present invention allow segments 416 related to the themes 414 to be collected by theme so that a viewer can choose to engage one or more themes and experience just those segments 416. For example, if the viewer only wants to watch the "plays" theme 418, then the viewer can elect that theme and will experience the play segments 420. Accordingly, the viewer can experience the plays at the kickoff, 1^{st} down, 2^{nd} down, at the segments 420 etc., but advantageously will not have to sit through commentary, commercials, or other undesired content.

One presently preferred embodiment of the present invention allows for collecting such thematically relevant aspects, thereby enabling a user to engage just segments identified as relating to themes of potential interest. Using a keyboard, a mouse, or other input devices, a user can manipulate the time marker 410 to different points on the timeline 404. At these points, the user can designate a start point or a stop point of a segment, just as the segment "touchdown" 422 has a start point 424 and an end point 426. A user using this exemplary embodiment can view the program, mark the segments with their stop points and end points, and associate them with one or more themes. Again, a segment can relate to one or more of the themes 414. For example, the touchdown is a play and a score. Therefore, it properly is associated with the plays theme 418 and a scores them 428. Potentially, a segment can relate to any number of the themes 414.

A user can create themes 414 as needed or may use a previously established set of themes 414. Again, using a keyboard, a mouse, or other input devices, the user can initiate a command to open a new theme, erase a theme, temporarily close a theme, or otherwise control the existence of the themes 414. In one presently preferred embodiment, themes 414 can be made visible or not visible. As a result, if a screen is becoming too crowded to easily view or read the themes 414 and associated segments 420, then some of the themes 414 or the associated segments 420 can be hidden to make engaging the screen easier.

A theme also can have sub-themes. For example, a theme such as commentary 430 can be divided into sub-themes for different commentators 432 and 434. Thus, within a single theme 430, a user of the system may choose to identify all commentators' commentary in case a viewer wishes to engage all of the commentary theme 430. Alternately, the viewer may specify only a sub-theme, thereby wishing to have commentary of a first type 432 from a first announcer and not commentary of a second type 434 from a second announcer.

In one presently preferred embodiment of the invention, it is envisioned that the user interface will allow familiar point-and-click, drag-and-drop operation to mark segments and associate the segments with themes. Advantageously, such thematic analysis can be performed by production personnel without assistance of skilled programmers or even editors.

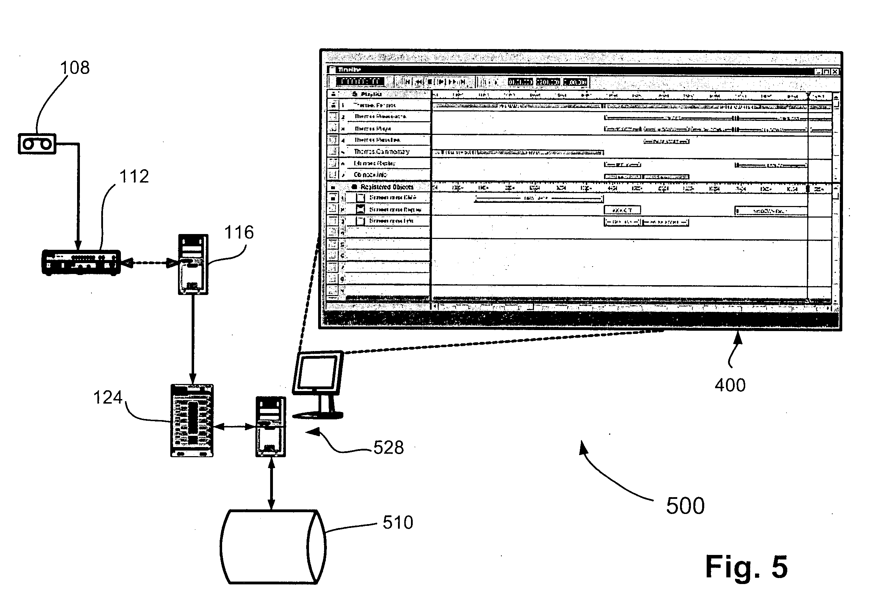

FIGURE 5 shows a thematic analysis environment 500 according to one presently preferred embodiment of the present invention. Some of the attributes of the environment 500 are similar to that of the environment 100 (FIGURE 1). Thus, common attributes to both environments are given the same reference numerals, and repetition of their basic functions is not necessary for an understanding of the invention.

Video or audio content is recorded to a tape 108 which is loaded onto a videotape deck 112 under the control of a logging system 116. Selected video segments are digitized and stored on a server 124. At an editing station 528 using an embodiment of the present invention, thematic analysis as previously described is undertaken to identify themes in the program and to associate segments with them. A thematically analyzed work, and data enabling a viewer to engage themes identified and analyzed, is stored on a storage device 510 for later dissemination via broadcast or other distribution.

Unlike the environment 100 of FIGURE 1, in the environment 500 the completed, analyzed program may not merely be written to a linear storage medium such as a tape 108. Instead, to facilitate direct access to the themes identified, a direct-access storage device 510 is used to facilitate nonlinear, theme-based access created using embodiments of the present invention. Thus, if a user wishes to engage a theme involving segments at many disparate locations along the program timeline, the user will be able to do so by the direct access storage device.

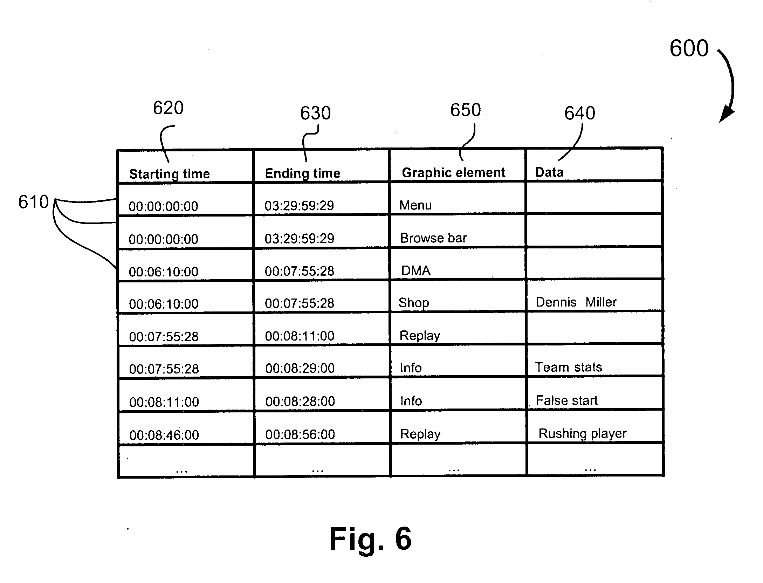

FIGURE 6 shows how the thematic content developed in the environment 500 (FIGURE 5) using a thematic content editing tool as presented in the screen 400 (FIGURE 4) generates a data structure that can be used by a viewing device. A table 600 is used to collect information about segments and themes, thereby allowing a suitably enabled viewing device to permit a viewer to identify one or more themes and engage associated content. A series of segments 610 represents the rows of the table. The columns represent information about each of the segments 610. A first column 620 of the table 600 lists starting times of each of the segments, while a second column 630 lists ending times. As previously described, the starting and ending times define boundaries of segments, thereby allowing the segments to be thematically associated.

A last column 640, in the embodiment shown, potentially associates a theme with each of the segments 610. As shown in the table 600, not all of the segments 610 are associated with a theme. It will be appreciated that some aspects of a program, particularly a sporting event, may have no significance related to themes of interest, such as time lost waiting between plays of a game, timeouts, commercials, or other not-highly-desired aspects of such a program. For those segments 610 that are associated with a theme, a suitable viewing device could parse the column 640 for segments identified with a theme and access those for the viewer.

Additional columns can associate other content with the segments 610. For example, a graphic element column 650 allows labels, interactive menus, or other information to be displayed on a screen. Accordingly, a suitably enabled viewing device could not only allow a viewer to choose themes with which to engage the segments 610, but suitably adds additional content for the user.

Such thematic information can be used in a variety of contexts. Such thematic information can be used with broadcast or stored programs. Moreover, thematic information generated by embodiments of the present invention could be used in the creation of prerecorded programs to create richer experiences for the user. DVDs commonly incorporate additional material for viewers to further appreciate the program recorded on the DVD. As previously explained, embodiments of the present invention facilitate creation of such information and can further enhance material provided on such prerecorded media.

For another non-limiting example, such thematic data is highly useful for broadcasts stored on disk-equipped set-top boxes (STBs), commonly called Personal Video Recorders (PVRs). Thematic information generated by embodiments of the present invention, coupled with the direct access storage of a PVR, allows a viewer to nonlinearly engage a recorded program through one or more selected themes. Thematic indexing data may be broadcast to and stored onto the PVR, thereby enabling thematically-based random access to corresponding video works stored on the PVR. This is analogous to the Chapter Search capability of DVDs, but is more extensive. Thematic information may be displayed alongside or overlaid onto the DVD video content, to alert the user as to position within the narrative. Further, thematic indexing may be used to control the timing and sequence of video display. A viewer might select a subset of the themes available for the work, then view, in forward or reverse temporal sequence, the portions of the video indexed by those themes.

In the PVR context, many applications are possible. In the example of a football game that was either previously played or in progress, a viewer might select the "scores" theme and view only those portions of the game which depict scoring plays. Similarly, thematic tags may be used in a search mode to facilitate locating a particular point in the video at which to commence viewing.

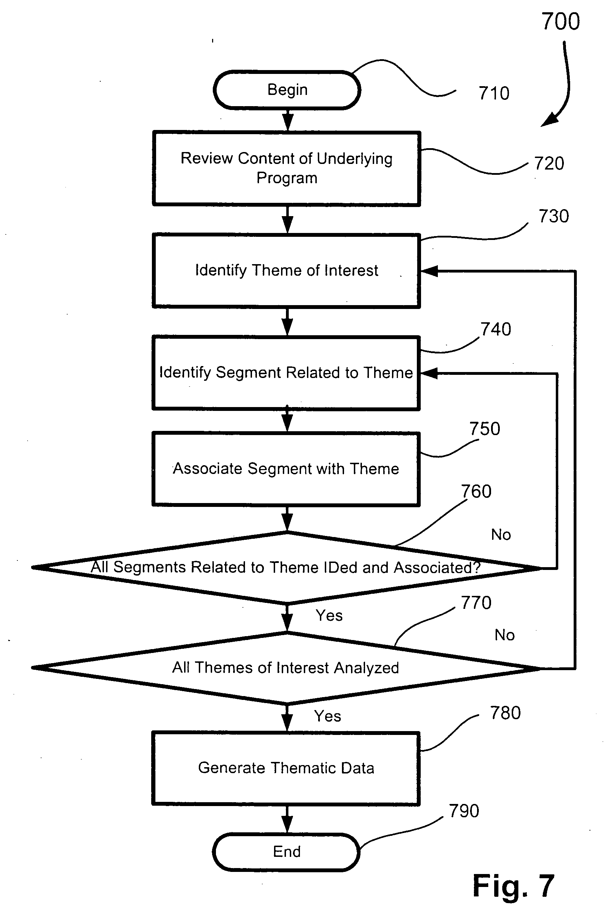

FIGURE 7 represents a flowchart of a routine 700 for using an embodiment of the present invention to thematically analyze a program and generate thematic information. The routine 700 begins at a block 710. Through an interface of an embodiment of the present invention, at a block 720 a user reviews content of an underlying program. At a block 730, themes of interest are identified with which segments will be associated. At a block 740, segments related to a theme are identified. At a block 750, the segment identified as related to the theme is associated with the theme. At a decision block 760, it is determined if all the segments related to the theme have been identified and associated with the theme. If not, the routine 700 loops to the block 740 to continue identification of segments related to the theme. If so, at a decision block 770 it is determined if all the themes of interest have been analyzed. If not, the routine 700 loops to the block 730 to identify the next theme of interest. If so, at a block 780 thematic data is generated. The thematic data may take a tabular form such as the table 600 (FIGURE 6). Once the thematic data has been generated, the routine 700 ends at a block 790.

It will be appreciated that the routine 700 could be manifested in a number of ways. For example, the routine 700 shown in FIGURE 7 is theme-driven, with a user following a theme and associating with it related segments. As an alternative, the routine could be segment-driven. In the latter, segments could be viewed and identified one at a time and linked to themes of interest with an emphasis on the segment instead of the theme. Other such variations are possible to suit prerogatives of a user of the system.

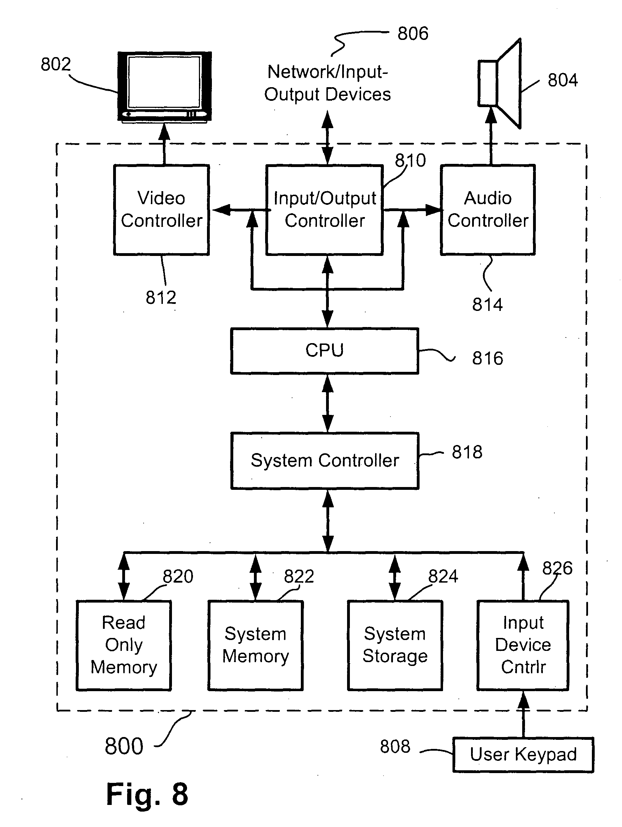

FIGURE 8 shows a computer system 800, which could be in the form of an editing station for using embodiments of the present invention. The computer system 800 is operable for controlling a display 802, such as a television, and an audio subsystem 804, such as a stereo or a loudspeaker system. The computer system 800 receives input from a network or other input-output devices 806. As previously described, the system 800 is operable to control a videotape deck (not shown) or other device from which program segments can be processed. The computer system 800 also receives user input from a wired or wireless user keypad or other input devices 808.

Input is received via an input/output controller 810, which directs signals to and from a video controller 812, an audio controller 814, and a central processing unit (CPU) 816. In turn, the CPU 816 communicates through a system controller 818 with input and storage devices such as read only memory (ROM) 820, system memory 822, system storage 824, and input device controller 826. Completed programs and/or data structures storing thematic information can be stored on the system storage device 824 or routed through the network 806 for storage.

While the preferred embodiment of the invention has been illustrated and described, as noted above, many changes can be made without departing from the scope of the invention. Accordingly, the scope of the invention is not limited by the disclosure of the preferred embodiment. Instead, the invention should be determined entirely by reference to the claims that follow.

## Claims

1. A method for generating thematic information correlated with segments for possible inclusion in a program, the method comprising:
developing thematic information within a program; and
generating a data structure collecting information identifying a theme and associating a segment with the theme, the data structure being configured to be engaged by a media player to present additional content related to the thematic information in the program.

2. The method of claim 1, further comprising:
reviewing a plurality of segments to identify the theme in the program;
identifying the segment of the program related to the theme; and
associating the segment with the theme.

3. The method of claim 1 or 2, further comprising providing a timeline associated with the program.

4. The method of claim 3, wherein the timeline reflects timing of a flow of the program using one of a time or a frame count.

5. The method of claim 4, further comprising operably linking the timeline with the program such that manipulating a time pointer associated with the timeline manipulates the flow of the program, such that the user can manipulate the flow of the program by moving the time pointer on the time line.

6. The method of claim 3, 4 or 5, wherein the segment of the program is identifiable by a temporal position of the segment on the timeline.

7. The method of claim 6, wherein the temporal position of the segment on the timeline is used to associate the segment with the theme.

8. The method of any one of the preceding claims, wherein a plurality of themes are identifiable in the program.

9. The method of claim 8, wherein a first theme is associable hierarchically in relation to a second theme.

10. The method of claim 8 or 9, further comprising a user interface wherein at least one theme is displayable at one time.

11. The method of claim 8, 9 or 10, wherein one of the segment or a portion of the segment are associable with more than one of the plurality of themes.

12. The method of any one of the preceding claims, wherein the data structure is configured as a table, a first dimension of the table listing a plurality of segments identified in the program and a second dimension of the table listing one of a plurality of themes identified in the program, such that presentation of the table allows the plurality of segments to be associated with one or more of the plurality of themes.

13. A computer readable medium comprising computer program code means which, when executed on a computer, enable the generation of thematic information correlated with segments for possible inclusion in a program in accordance with any one of claims 1 to 12.

14. A system for generating thematic information correlated with segments for possible inclusion in a program, the system comprising:
a first component configured to develop thematic information within a program; and
a second component configured to generate a data structure collecting information identifying a theme and associating a segment with the theme, the data structure being configured to be engaged by a media player to present additional content related to the thematic information in the program.

15. The system of claim 14, further comprising:
a third component configured to review a plurality of segments to identify the theme in the program;
a fourth component configured to identify the segment of the program related to the theme; and
a fifth component configured to associate the segment with the theme.

16. The system of claim 14 or 15, further comprising a sixth component configured to provide a timeline associated with the program.

17. The system of claim 16, wherein the timeline reflects timing of a flow of the program using one of a time or a frame count.

18. The system of claim 17, further comprising a seventh component configured to operably link the timeline with the program such that manipulating a time pointer associated with the timeline manipulates the flow of the program such that the user can manipulate the flow of the program by moving the time pointer on the time line.

19. The system of claim 16, 17 or 18, wherein the segment of the program is identifiable by a temporal position of the segment on the timeline.

20. The system of claim 19, wherein the temporal position of the segment on the timeline is used to associate the segment with the theme.

21. The system of any one of claims 14 to 20, wherein a plurality of themes are identifiable in the program.

22. The system of claim 21, further comprising an eighth component configured to hierarchically associate a first theme in relation to a second theme.

23. The system of claim 21 or 22, further comprising a ninth component configured to provide a user interface wherein at least one theme is displayable at one time.

24. The system of claim 21, 22 or 23, further comprising a tenth component configured to associate one of the segment or a portion of the segment with more than one of the plurality of themes.

25. The system of any one of claims 14 to 24, further comprising an eleventh component configured to configure the data structure as a table, a first dimension of the table listing a plurality of segments identified in the program and a second dimension of the table listing one of a plurality of themes identified in the program, such that presentation of the table allows the plurality of segments to be associated with one or more of the plurality of themes.

26. A computer having the computer program code means described in claim 13 loaded thereon.
